# EUROPÄISCHE PATENTSCHRIFT

(11) **EP 1 280 644 B1**
(45) Veröffentlichungstag und Bekanntmachung des Hinweises auf die Patenterteilung: **26.10.2005**
(21) Anmeldenummer: 01925275.8
(22) Anmeldetag: 10.05.2001
(51) Int. Cl.: B29C 45/17

(54) **VERFAHREN ZUM GESTEUERTEN ANFAHREN UND ANPRESSEN EINER SPRITZDÜSE SOWIE SPRITZAGGREGAT**
METHOD FOR THE CONTROLLED ADVANCING AND PRESSING OF AN INJECTION NOZZLE AND INJECTION UNIT
PROCEDE DE MISE EN PLACE ET D'APPLICATION COMMANDEES D'UNE TUYERE D'INJECTION ET UNITE D'INJECTION

(30) Priorität: 11.05.2000 CH 92000
(43) Veröffentlichungstag der Anmeldung: 05.02.2003
(73) Patentinhaber: Netstal-Maschinen AG, 8752 Näfels (CH)
(72) Erfinder: WEINMANN, Robert, CH-8872 Weesen (CH); CHROMY, Franz, CH-8753 Mollis (CH)
(74) Vertreter: Ackermann, Ernst
(86) Internationale Anmeldenummer: PCT/CH2001/000288
(87) Internationale Veröffentlichungsnummer: WO 2001/085425

(56) Entgegenhaltungen:
- WO-A-95/30529
- DE-A- 4 008 478
- FR-A- 1 184 455
- PATENT ABSTRACTS OF JAPAN vol. 18, no. 335 (M-1627), 24. Juni 1994 (1994-06-24) -& JP 06 079759 A (SUMITOMO JUKIKAI PLAST MACH KK;OTHERS: 01), 22. März 1994 (1994-03-22)
- PATENT ABSTRACTS OF JAPAN vol. 1997, no. 4, 30. April 1997 (1997-04-30) -& JP 08 318546 A (JAPAN STEEL WORKS LTD:THE), 3. Dezember 1996 (1996-12-03) -& DATABASE WPI Week 199707 Derwent Publications Ltd., London, GB; AN 1997-072522 XP002174052

## Beschreibung

### Technisches Gebiet

Die Erfindung betrifft ein Verfahren zum gesteuerten An- und Wegfahren des Spritzaggregates einer Spritzgiessmaschine mittels eines Verschiebeantriebes und Anpressen der Spritzdüse gegen das Werkzeug bzw. die Form für die Spritzarbeit mittels eines Anpressantriebes, wobei das Anfahren und Wegfahren sowie das Anpressen getrennt und unabhängig gesteuert werden. Die Erfindung betrifft ferner ein Spritzaggregat mit steuerbaren Antriebsmitteln für das Verschieben des Spritzaggregates gegenüber dem Ständer einer Spritzgiessmaschine sowie das Anpressen der Spritzdüse gegen die Form für einen Automatikbetrieb, mit zwei unabhängig aktivierbaren Antrieben, einem Anpressantrieb für den Aufbau der Anpresskraft für die Spritzarbeit sowie einem Verschiebeantrieb für den grossen Verschiebeweg des Spritzaggregates.

### Stand der Technik

Die Düsenanlegung und Anpressung an die Spritzformen in Spritzgiessmaschinen ist sehr anspruchsvoll. Bei Spritzgiessautomaten mit höchster Leistungsfähigkeit wird einerseits erwartet, dass das Anlegen und Anpressen mit dem geringst möglichen Zeitverlust vor sich geht, nicht zuletzt auch deshalb, weil diese Funktion für den Giessprozess an sich nicht relevant ist. Es wird vorausgesetzt, dass die Anpressung auch bei extremen Anforderungen genügend ist. In der Praxis kennt man verschiedene Betriebsweisen für das formseitige Anpressen der Spritzdüse.
- Gemäss einer ersten Betriebsweise bleibt die Spritzdüse für die ganze Betriebsdauer, z.B. während eines ganzen Tages, formseitig dauernd angepresst.
- In etlichen Anwendungen wird gewünscht, dass nach jedem Schuss wenigstens ein thermischer Kontaktunterbruch zwischen Form und Spritzdüse hergestellt wird.
- Im dritten Fall wird zyklisch nach jedem Schuss die Düse um einige Millimeter oder Zentimeter zurückgefahren, so dass ein echter Spalt zwischen Spritzdüse und Form entsteht.

Je nach den besonderen Anforderungen werden im Stand der Technik sehr unterschiedliche bauliche Ausgestaltungen vorgeschlagen, meistens unausgesprochen, mit Bevorzugung einer besonderen Betriebsweise.

Vor allem beim zyklischen Abheben der Spritzdüse vom Werkzeug bzw. von der Form sollen nach jedem Schuss ein hartes Aufschlagen und entsprechende zyklische Anlegeschocks vermieden werden. Ist die Düsenanpresskraft und/oder der Anlegeschock zu gross, können dadurch Schäden an der Form und der Formbefestigung verursacht werden. Es muss ferner bei allen Betriebsweisen dafür gesorgt werden, dass selbst bei höchsten Drücken in der Spritzmasse die Anpresskraft gross genug ist, damit sich die Spritzdüse zu keinem Zeitpunkt durch den Druck der Kunststoffmasse ungewollt von der Anlegestelle abhebt und durch den entstehenden Spalt Spritzmaterial austreten kann. Ein Materialaustritt an der Anlegestelle wirkt sich direkt negativ aus auf die Qualität und vor allem auf die Genauigkeit der Spritzteile. Ein Materialaustritt im Sinne eines Unfalles muss durch geeignete Ausgestaltung des Anpressantriebes vermieden werden. Im Falle von traditionellen hydraulischen Maschinen, bei denen das Spritzaggregat durch hydraulische Zylinder bewegt wird, können die dargestellten Probleme durch präzise Steuerung und Regelung von Oeldruck und Oelmenge sehr einfach gelöst werden. Für eine volle Regelung des Anpressdruckes kann der momentane Istzustand durch entsprechende Sensoren erfasst und notwendige Korrekturen laufend vorgenommen werden. Eine neue Situation ergab sich durch die Entwicklung von rein elektrisch angetriebenen Spritzgiessmaschinen.

Die JP-A 60-25 94 19 zeigt eine der älteren Lösungen für elektrisch betriebene Maschinen. Das Spritzaggregat ist mitsamt dem Antrieb für Anfahren und Anpressen auf dem Maschinenständer verankert. Durch den Antrieb wird die Spritzdüse gegen die Form gestossen. Die Aggregatverschiebung und die Anpressung erfolgt durch einen Servomotor. Vom Servomotor mit Zahnrad- und Gewindespindelantrieb wird das Aggregat verschoben, bis die Düse zum Anliegen kommt. Der selbe Motor baut durch fortgesetzte Drehbewegung der Motorachse in einem zwischengeschalteten Federpaket die erforderliche Anpresskraft auf, so dass nach Sperren der Motorwelle die in der gespannten Feder gespeicherte Druckkraft genügt für ein sicheres Anpressen während dem ganzen Spritzvorgang. In der Folge wurde die entsprechende Federlösung in verschiedenen Ausgestaltungen, z.B. gemäss den EPA 193 617, 328 671 und 422 224, weiterentwickelt. Als grosser Vorteil beim Einsatz von Federn wird der dämpfende Effekt beim raschen Aufschlagen der Düse auf die Form geltend gemacht.

Einen Schritt weiter geht die jüngste Lösung gemäss DE 195 80 020. Auch dieses Konzept geht von elektrisch betriebenen Spritzgiessmaschinen aus. Die Bewegung der Spritzdüse wird präzise geregelt und kann ohne Dämpfungsfeder schockfrei bis zur Anlage gefahren werden. Im Unterschied zu den vorangehenden Federlösungen werden bei der DE 195 80 020 folgende drei Hauptschritte vorgeschlagen:
- Die Spritzdüse wird zur Herstellung eines Kraftschlussses über Zuganker oder Säulen zwischen der festen Formhälfte und der Spritzeinheit verspannt.
- Der Übertrieb von einem elektromotorischen Antrieb zur Erzeugung der Düsenanpresskraft wird federfrei ausgebildet, wobei
- Steuerungsmittel für die Stellung der Düsenanpresskraft, abhängig von der Spritzkraft oder des Spritzdruckes, vorgesehen sind.

Gemäss Weiterausgestaltungsvorschlägen kann die Düsenanpresskraft als Funktion des Verlaufes der Spritzkraft oder des Spritzdruckes gesteuert und über die Stellung des Drehmomentes eines Servomotores geregelt werden. Ferner ist es möglich, die Düsenanpresskraft zusätzlich über die Position des Aggregates zu steuern. Unzweifelhaft lässt sich der ganze Bewegungsablauf und der Aufbau des Anpressdruckes mit der Lösung gemäss DE 195 80 020 auf einem höheren Stand kontrollieren im Vergleich zu den zuvor beschriebenen Federlösungen. Die Lösung gemäss DE 195 80 020 hat mit der Tatsache, dass der grösste Druck für die Anpressung nur dann erzeugt wird, wenn er für die Druck- und Nachdruckphase benötigt wird, den grossen Vorteil der Energieersparnis. Es werden keine unnötigen Kräfte auf die Form übertragen, und die erforderliche Motorleistung wird auf ein Minimum reduziert. Praxisversuche haben bestätigt, dass mit einer gut ausgelegten Regelung die federfreie Lösung gegenüber einer Lösung mit Feder im Hinblick auf die statischen und dynamischen Abläufe optimal beherrschbar ist. Beide Lösungswege setzen jedoch den Einsatz von Servomotoren oder zumindest gleichwertigen Motortypen voraus. Die jüngste Praxis zeigt, dass eine elektrische Lösung wesentlich teurer zu stehen kommt als eine hydraulische. Der höhere Maschinenpreis rechtfertigt sich jedoch nicht in allen Fällen.

Von den Erfindern ist erkannt worden, dass das dargestellte Problem in den zitierten Druckschriften zu einseitig gesehen und vor allem zwei Aspekte in den Vordergrund gestellt wurden: ein gehöriger Druckaufbau ohne unnötigen Energieeinsatz sowie das schockfreie Anlegen. Diese beiden Aspekte sind für die Mehrzahl der Anwendungsfälle überbewertet. Die wirklichen Praxisanforderungen stellen sich vielmehr durch unterschiedliche Einsatzgebiete, z.B. bei der CD- und Preformherstellung, bei welchen jahraus, jahrein in Bezug auf die Dimmension der Spritzteile identische Form- und Düsenabmessungen eingesetzt werden.

Im automatischen Spritzbetrieb wird die Spritzdüse einmal angelegt und eine, gegebenenfalls wählbare Anpresskraft aufgebaut. Dies ohne Rückfahrbewegung des Aggregates während dem Spritzbetrieb, z.B. eines ganzen Tages. Erst für das Ausspritzen oder für Montage- oder Wartungsarbeiten muss das Aggregat mit einem grossen Hub von der Form weggefahren werden. Die zitierten Druckschriften des Standes der Technik suggerieren, dass in der Praxis beinahe im Zyklus von wenigen Sekunden die Düse an die Form angeschlagen wird. In einer Vielzahl von Praxiseinsätzen stellt sich das Problem des schockfreien Anlegens aber höchstens einige Male pro Tag.

Die DE 40 08 478 zeigt eine Lösung bei der vorausgesetzt wird, dass im automatischen Betrieb die Düse dauernd angepresst bleibt. Es handelt sich dabei um einen Sonderfall. Ein zyklischer Kontaktunterbruch bzw. Mikrobewegungen der Düsen können nicht kontrolliert durchgeführt werden.

### Darstellung der Erfindung

Der Erfindung wurde nun die Aufgabe gestellt, unabhängig eines allfälligen Federeinsatzes eine kostengünstige bzw. wirtschaftliche Lösung zu finden, welche in den unterschiedlichsten Einsätzen einen optimalen Betrieb erlaubt.

Das erfindungsgemässe Verfahren ist dadurch gekennzeichnet, dass der Anpressantrieb für die Spritzarbeit eingekuppelt wird und im Automatikbetrieb eingekuppelt bleibt und die erforderliche Anpresskraft und die erforderlichen Bewegungen, für ein zyklisches Anpressen einerseits und einen thermischen Kontaktunterbruch oder das Herstellen eines kleinen Spaltes zwischen Spritzdüse und Form andererseits vom Anpressantrieb sichergestellt wird.

Das erfindungsgemässe Spritzaggregat ist dadurch gekennzeichnet, dass dem Anpressantrieb eine steuerbare Kupplungsmechanik zugeordnet und ein möglichst spielfreier Kraftschluss zwischen Spritzdüse und Form herstellbar ist, wobei die Bewegungen während dem Automatikbetrieb, das zyklische Anpressen, einen thermischen Kontaktunterbruch oder das Herstellen eines kleinen Spaltes zwischen Spritzdüse und Form andererseits, vom Anpressantrieb sicherstellbar sind.

Von den Erfindern ist erkannt worden, dass bei den bekannten Lösungen, mit Ausnahme von rein hydraulischen Antrieben, für den Einsatz mit nur einem steuerbaren Antrieb ein zu hoher Preis bezahlt werden muss. Dies aus dem einfachen Grund, weil die beiden Grundfunktionen, Verfahren und Anpressen, welche mit nur einem Antrieb gelöst werden müssen, extremer nicht sein könnten. Das ganze Spritzaggregat wird mit hoher Präzision auf Führungen und sehr geringem Spiel gelagert, so dass für das blosse Verschieben des Aggregates eine geringe Kraft von einigen Kilogrammen genügt. Das Aggregat kann fast widerstandslos über der erforderlichen Wegstrecke bis zum Anlegen bzw. auf Anschlag verfahren werden. Für die zweite Phase, nämlich den Aufbau des Anpressdruckes, wird ein Minimum an Energie benötigt aus dem einfachen Grunde, weil nunmehr nahezu kein Verschiebeweg mehr erforderlich ist. Tatsächlich kann die neue Erfindung die wichtigsten Vorteile der bekannten Lösungen, vor allem auch im Rahmen eines kostengünstigen Konzeptes, kombinieren. Zumindest bei kleineren Maschinen weist das Spritzaggregat eine relativ kleine Masse auf, so dass das blosse Hin- und Herschieben bzw. Zufahren und Wegfahren mit einfachsten Mitteln durchführbar ist. Sinngemäss bieten sich für den Anpressantrieb einfachste Mittel an, um einen grossen Kraftaufbau mit geringstem Energieaufwand zu erzeugen. Dies, weil nahezu kein Weg erforderlich ist.

Dieser Umstand wurde bei der DE 40 08 478 ausgenutzt. Die DE 40 08 478 schlägt vor, die beiden Grundfunktionen vollständig getrennt mit einem ebenfalls bekannten Fahrantrieb mit geringer Kraft und grossem Hub für die Verfahrbewegung und einem separaten, an sich bekannten Antrieb mit grosser Kraft und kleinem Hub zur Erzeugung der Düsenanpresskraft zu erfüllen. Die Plastifiziereinheit wird auf Gleitführungen eines Untersatzes in das Werkzeug in Richtung Schliesseinheit verfahren. Die Anpresskraft wird während des Einspritzens erzeugt. Der kurzhubige Kolbenzylinderantrieb für das Anpressen besteht aus einem Druckzylinder, der im Untersatz unterhalb und spitzwinklig zur Längsachse der Plastifiziereinheit verankert ist. Die Kolbenstange bzw. dessen Kolbenfläche weist in Richtung Plastifizierantrieb. An der Unterseite der Plastifiziereinheit ist ein Druckstück angeordnet, an das die Kolbenstange des Kolbenzylinderantriebes erst anfährt, wenn die Plastifiziereinheit bereits am Werkezug anliegt. Die Plastifiziereinheit überfährt das Druckstück. Die beiden Antriebe sind baulich völlig voneinander getrennt. Der Druckzylinder für das Anpressen kann nur in eine Richtung aktiv eingreifen.

Bei der neuen Lösung stehen vor allem zwei Funktionen im Zentrum:
a) die Funktion des Kuppelns
b) die Funktion der Bewegungen insbesondere der Mikrobewegungen.

Unter Mikrobewegung werden die Eingriffe verstanden, welche einerseits eine Bewegung im Millimeterbereich oder weniger, meistens unterhalb von 10 mm, und andererseits durch die Kleinstbewegungen aufgrund von Materialdehnungen verursacht werden durch den Aufbau der recht hohen Kräfte von z.B. 1 bis 5 Tonnen. Gemäss der neuen Lösung wird die Spritzdüse über die Kupplung gleichsam durch den Anpressantrieb in den Griff genommen und kann die notwendigen Funktionen für die verschiedensten Betriebsweisen, je nach gewähltem Modus, sicherstellen. Von den Erfindern ist ein ganz wichtiger Umstand erkannt und für die Lösung optimal berücksichtigt worden. Wie dargelegt, gibt es in der Praxis zwei Einsatzgebiete für Spritzgiessmaschinen: Das erste kann mit den beiden spezialisierten Produkten, nämlich Compakt Disk sowie Preform für PET-Flaschen, umschrieben werden. In beiden Fällen werden immer die selben Formtypen und Düsenkonstruktionen eingesetzt. Daraus ergibt sich, dass das Mass zwischen dem Aggregat und der Form im Giessbetrieb immer gleich ist. Die neue Lösung nutzt diesen Umstand, indem einfachste bauliche Mittel gewählt werden. Das zweite Einsatzgebiet ist das Gebiet der klassischen Spritzgiessmaschinen. Hier werden in der selben Maschine regelmässig unterschiedlichste Formen eingesetzt. Es sind hier aber auch verschiedenartige Düsen notwendig, um im Einzelfall den Giessprozess optimieren zu können.

Die neue Erfindung bietet zwei spezifische Lösungsvarianten. Im ersten Fall können, z.B. mit einfachsten Pneumatikzylindern, die Funktionen Anfahren und Anpressen im Vergleich zu vielen Lösungen des Standes der Technik gleichsam mit einem Bruchteil an baulichem Aufwand erfüllt werden. Sind Abmessungsvariationen von Formen und Spritzdüsen gegeben, so kann mit relativ kleinem Mehraufwand der Anpressantrieb in beliebiger Position eingekuppelt werden.

In jedem Fall können die beiden Antriebe auf ihre spezifische Aufgabe hin konstruiert werden. Wie in der Folge noch gezeigt wird, kann auf besondere Anwendungen hin, je nach geforderter Grösse und Leistungsfähigkeit, eine Ökonomielösung konzipiert werden.

Für entsprechende, besonders vorteilhafte Ausgestaltungen wird auf die Ansprüche 2 bis 6 sowie 8 bis 24 verwiesen.

Gemäss einer ganz besonders vorteilhaften Ausgestaltung des erfindungsgemässen Verfahrens wird das Spritzaggregat einerseits zurückgefahren und andererseits mit der Spritzdüse auf Anschlag gefahren, so dass nach jeder grösseren Verschiebung des Aggregates die Spritzdüse wieder in eine definierte Ausgangslage bzw. in die Nulllage für den Anpressantrieb positioniert wird. Vorteilhafterweise wird dabei die Steuerfunktion Anfahren durch Aktivierung eines Hilfsantriebes, vorzugsweise durch einen direkt wirkenden Linearverschiebeantrieb, sichergestellt. Die Steuerfunktion Anpressen umfasst eine grosse Kraft bzw. Vorspannkraft mit minimalstem Verschiebeweg der Spritzdüse und erfolgt durch einen Anpressantrieb.

Dabei wird mit der Steuerfunktion "Anpressen" bzw. der genannten Mikrobewegungen, insbesondere für einen normalen Automatikbetrieb, der zyklische Ablauf Anpressen einerseits und der thermische Kontaktunterbruch oder das Herstellen eines kleinen Spaltes zwischen Spritzdüse und Form andererseits, allein durch den Anpressantrieb sichergestellt. Über eine schaltbare Kupplung wird ein möglichst spielfreier Kraftschluss zwischen der Spritzdüse und der Form hergestellt. Für die normale Spritzarbeit bleibt die Kupplung dauernd eingekuppelt. Der Vorgang "Einkuppeln" stellt deshalb keine besonderen Ansprüche, ausser an die Betriebssicherheit und Dauerhaftigkeit bzw. Massstabilität der Verbindung. Es wird keine Kupplung mit hoher Schaltkadenz benötigt. Die Düsenanpresskraft kann, wenn dies erforderlich ist, abhängig von der erforderlichen Spritzkraft oder des Spritzdruckes bzw. als Funktion des Verlaufes der Spritzkraft oder des Spritzdruckverlaufes, eingestellt bzw. geregelt werden.

Der Düsenanpressantrieb weist eine steuerbare Kupplungsmechanik auf, welche für den Zeitabschnitt der Betätigung des Verschiebeantriebes, z.B. für Service- oder Ruhestellungen, auskuppelbar ist. Die Anpressvorrichtung weist eine Zugankerung auf, über welche Spritzaggregat, feste Formhälfte sowie Kupplungsmechanik miteinander verspannbar sind. Vorteilhafterweise werden zwei Anpressvorrichtungen vorgesehen, welche beidseits des Spritzaggregates parallel und symmetrisch angeordnet sind, derart, dass die Wirkachsen der Anpressvorrichtungen und die Achse der Spritzschnecke eine gemeinsame Ebene bilden. Ein Teil der Länge der Zuganker oder Säulen wird als Kugel- oder Rollenspindel bzw. als Gewindespindelantrieb ausgebildet, derart, dass das Spritzaggregat nach Einkupplung der Antriebsmittel durch eine Zwangsdrehbewegung einer entsprechenden Kugel- bzw. Rollenmutter an die Aufspannplatte anpressbar ist. Bevorzugt bleibt die Kugel- oder Rollenspindel während der Produktion ständig über eine entsprechende Kugel- oder Rollenmutter im Kraftschluss. Nach Beendigung einer Tages- oder Wochenarbeit wird die Kupplung gelöst, so dass die Kugel- oder Rollenmutter für die Aggregat-verschiebung im Freilauf mitdrehen kann.

Gemäss einer weiteren Ausgestaltung weist der Anpressantrieb einen Zahnstangen- oder einen Pneumatikantrieb auf, welcher für den Zeitabschnitt der Betätigung des Verschiebeantriebes, z.B. für Service- oder Ruhestellungen, auskuppelbar bzw. aus einer Klemmstellung lösbar ist.

Die neue Lösung gestattet, dass in vielen der Anwendungsfälle sowohl der Anpressantrieb wie auch der Verschiebeantrieb durch Aktivieren von gesonderten steuerbaren Zylindern, vorzugsweise eines Pneumatikzylinders, gewährleistet wird. Dabei werden für den Düsenanpressantrieb zwei direkt wirkende grossflächige Pneumatikzylinder eingesetzt. Durch eine Regelung des wirksamen Luftdruckes in den grossflächigen Pneumatikzylindern kann die Anpresskraft sowohl in Bezug auf die Zeit wie die Grösse der Kraft beliebig gesteuert bzw. geregelt und den jeweiligen Verhältnissen angepasst werden. Unstrittig ist ein Zylinder, besonders ein pneumatischer Zylinder, nicht nur das einfachste Mittel für einen Linearantrieb. Zylinder und Druckregelventil können optimal platziert und die Druckversorgung dorthin geführt werden. Eine pneumatische Zylinderlösung ist von der Kostenseite her unvergleichlich billiger als ein gesteuerter Servomotor. Der Zylinder für das Düsenanlegen und wieder Wegfahren muss nur eine Hin- und Herbewegung sicherstellen, so dass dieser Teil besonders einfach und kostengünstig gebaut werden kann. Dies bedeutet, dass für die ganz konkrete Ausbildung der Antriebe für den Druckaufbau bautechnisch auf einfachste Pneumatikzylinder zurückgegriffen werden kann.

Bevorzugt wird der Verschiebeantrieb für die Aggregatbewegung in der Maschinenmitte und etwa auf der Höhe von zwei seitlichen Führungen angeordnet. Die Düsenan-pressung weist zwei symmetrisch zur Düsenachse und etwa auf der Höhe der Düsenachse angeordnete Zuganker oder Zugstangen auf. Im Querschnitt betrachtet entsteht zwischen der Achse der Linearantriebsmittel für die Aggregatverschiebung und der zwei Düsenanpressungen eine Dreieckform. Für den "Leerweg" der Spritzdüse greifen die Verschiebemittel, insbesondere ein Pneumatikzylinder, dort an, wo der leichte Verschiebewiderstand überwunden werden muss, nämlich etwa auf Schienen-höhe. Für den Aufbau der Anpresskraft wird dagegen symmetrisch zu der Düsenachse auf zwei Seiten die entsprechend grosse Kraft eingeleitet. Dabei wäre es denkbar, auch drei Antriebe vorzusehen. Damit wird genau so für den Kraftaufbau ein idealer Krafteingriff ohne Seitenkräfte gewählt. Durch entsprechende Steuerung wird dafür gesorgt, dass mittels des Linearantriebes das Aggregat zumindest in die Nähe der Anlegestelle gefahren wird. In der Mehrzahl der Fälle wird jedoch die Düse in eine genau definierbare Stellung, z.B. auf Anschlag bzw. bis zum Anlegen gefahren, um eine definierte Position für das Kuppeln zu schaffen. Nach dem Kupplungsvorgang wird über die Steuerungsmittel der zweite Antrieb für den Aufbau der Anpresskraft aktiviert und die erforderliche Kraft erzeugt. Während der Phase des Spritzgiessens wird der Linearverschiebeantrieb ausgeschaltet. Bevorzugt erfolgt das Ein- und Auskuppeln unbelastet, das heisst, dass zumindest der Anpressantrieb nicht aktiviert ist.

Sobald der Spritzvorgang abgeschlossen, die Anpresskraft aufgehoben und die Kupplung ausgekuppelt ist, kann das ganze Spritzaggregat mit der Kraft des Linearantriebes in umgekehrter Richtung in die Ausgangsstellung zurückgefahren werden. Bei der zur Zeit preisgünstigsten Lösung genügen total vier oder fünf einfache pneumatische Zylinder zur Sicherstellung aller Bewegungsfunktionen für die Düsenanlegung.

Die Zuganker bzw. Zugstangen sind über einen Teil ihrer Länge als Kugel- oder Rollenspindel ausgebildet, so dass das Einspritzaggregat an irgend einer Position der Rollenspindel einkuppelbar und durch eine Zwangsdrehbewegung einer entsprechenden Kugel- bzw. Rollenmutter an die Aufspannplatte anpressbar ist. Die Kugel- bzw. Rollenmutter wird in Bezug auf die Kupplung so angeordnet, dass sie im Freilauf mitdreht und nur für den Zeitabschnitt der Anpressung bzw. der Einkupplung des Antriebmittels der Anpresskraftübertragung dient. Die Kugel- oder Rollenmutter ist fest am Gehäuseteil des Spritzaggregates gelagert, so dass sie während dem Fahrweg durch Freilaufen der Antriebskraft des Linearverschiebeantriebes kaum Widertand entgegensetzt.

Vorzugsweise ist die Spritzgiessmaschine eine horizontal arbeitende Kunststoffspritzgiessmaschine und mit Steuerungsmitteln ausgerüstet für die Wahl verschiedener Betriebsweisen:
- ein Automatikbetrieb mit zyklischem Anpressen einerseits und thermischem Kontaktunterbruch oder Herstellen eines Spaltes zwischen Spritzdüse und Form andererseits,
- ein Hand- oder Testbetrieb mit wählbarem Zyklusablauf oder
- ein Servicebetrieb ,
wobei je nach momentaner Betriebsweise der Düsenanpressantrieb oder der Verschiebeantrieb aktiviert und der jeweils inaktive Teil ausgekuppelt bzw. ausgeschaltet ist.

### Kurze Beschreibung der Erfindung

Die Erfindung wird nun an Hand von einigen Ausführungsbeispielen mit weiteren Einzelheiten erläutert. Es zeigen:
- die Figur 1: als Übersicht eine Seitenansicht der Spritzseite einer Spritzgiessmaschine;
- die Figur 2: einen Schnitt II - II der Figur 1;
- die Figur 3: eine Ansicht von oben gemäss Pfeil III der Figur 1;
- die Figur 4: teils schematisch einen Horizontalschnitt gemäss Pfeil IV in Figur 1;
- die Figur 5a und 5b: eine Variante zu den Lösungen gemäss den Figuren 2 bis 5 mit einem Drehflügelantrieb;
- die Figur 5c: den Drehflügelantrieb der Figur 5b in grösserem Massstab;
- die Figur 6: ein pneumatisches Antriebskonzept, z.B. für eine Maschine für die CD- oder PET-Preformenherstellung;
- die Figur 7: die Grundelemente für die Düsenanpress- sowie den Verschiebeantrieb der Figur 6;
- die Figur 8: die Antriebsmittel der Figuren 6 und 7 in einer Ruhestellung bzw. in der äussersten Rückfahrposition;
- die Figur 9: entsprechend der Figur 8, jedoch in Arbeitsposition für das Spritzen von Kunststoffteilen;
- die Figur 10: eine Zwillingsform für die CD-Herstellung;
- die Figuren 11 und 12: eine weitere Ausgestaltung des Anpressantriebes mit einem Zahnstangenantrieb, mit wählbarem Eingriff der Kupplung.

### Wege und Ausführung der Erfindung

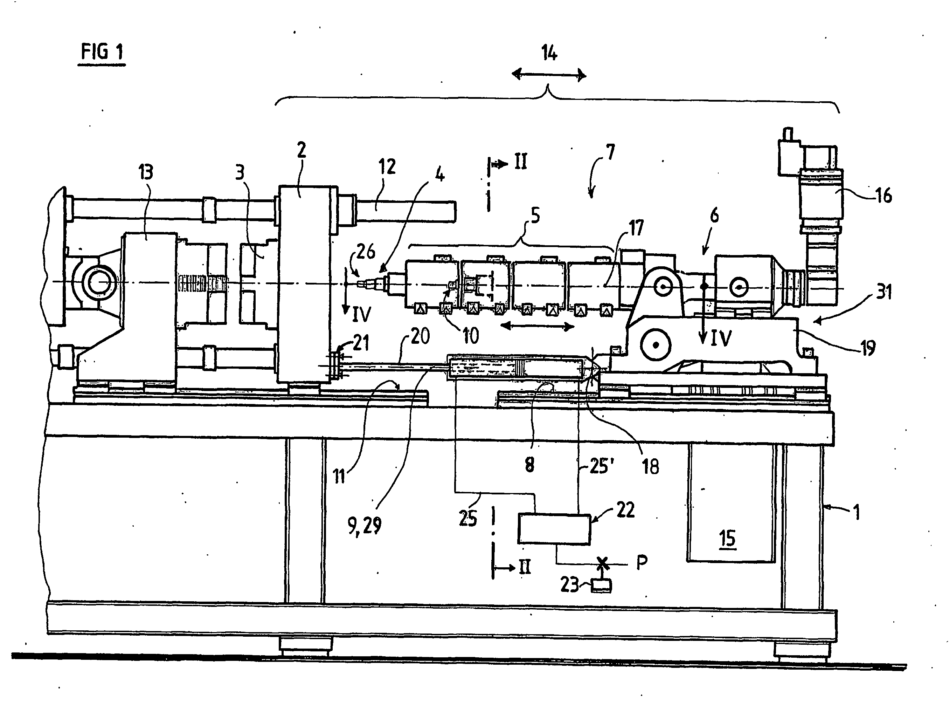

Die Figur 1 zeigt vereinfacht die Spritzseite einer Spritzgiessmaschine. Auf einem Maschinenbett 1 ist eine feste Werkzeugaufpsannplatte 2 befestigt, welche ein Werkzeug bzw. eine Form 3 trägt. Im Werkzeug 3 kann eine Spritzdüse 4 zum Anliegen gebracht werden. Bei der Figur 1 ist die Spritzdüse 4 in einer zurückgezogenen Lage. Für das Einspritzen der Kunststoffmasse, vor allem aber für die Nachdruckphase, muss die Spritzdüse mit einer genügenden Kraft angepresst werden. Die Plastifizierung 5 bildet mit der Spritzeinheit 6 das ganze Spritzaggregat 7, das auf Führungsschienen 8 längsverschiebbar auf dem Maschinenbett gelagert ist. Zwischen der Plastifizierung 5 und dem Maschinenbett 1 ist der Verschiebeantrieb 29, welcher einen Pneumatikzylinder 9 und das Spritzaggregat 7 nach vorne und bis zu einer maximalen rückwärtigen Lage der Düse nach hinten verschieben kann, wie mit 10 markiert ist.

Die Werkzeugaufspannplatte bzw. Aufspannplatte 2 ist beim dargestellten Beispiel ebenfalls auf Führungsschienen 11 abgestützt und über Säulen 12 mit der Antriebsseite für die Bewegung der beweglichen Form 13 verbunden. Von primärem Interesse für die folgenden Darlegungen jedoch ist die lineare Verschiebung des ganzen Spritzaggregates 7, welche durch den Verschiebeantrieb 29 erfolgt. Es besteht die Möglichkeit, bei entsprechender Ausbildung des Antriebes für die Säulen, z.B. für Servicestellungen, die ganze Gruppe, bestehend aus Aufspannplatte 2 und Spritzaggregat 7, gemeinsam zu verschieben, wie mit Pfeil 14 angedeutet ist. In einem Antriebsgehäuse 15 befindet sich der Antriebsmotor für die axiale Bewegung der Plastifizierschnecke 17. Für die rotative Bewegung der Schnecke 17 ist ein weiterer Antriebsmotor 16 vorgesehen. In Bezug auf das Spritzaggregat 7 zeigt die Figur 1 die lineare Verschiebung bzw. das Anfahren und Anlegen des Aggregates mit kleiner Kraft und grossem Weg. Der Pneumatikzylinder 9 ist am hinteren Ende über ein Gelenk 18 mit der Spritzeinheit 6 bzw. an dessen Basisplatte 19 verankert. Die Kolbenstange 20 ist fix mit der Aufspannplatte 2 über Flanschen 21 verbunden. Druckluft P wird über ein Umschalt- bzw. Wegventil 22 sowie Steuerventil 23 über Leitungen 25 resp. 25' zugeführt. Die Funktion des Pneumatikzylinders 9 ist primär ein Vorwärts- und Rückwärtstiewegen des Spritzaggregates bzw. das Anlegen in einer definierbaren Position.

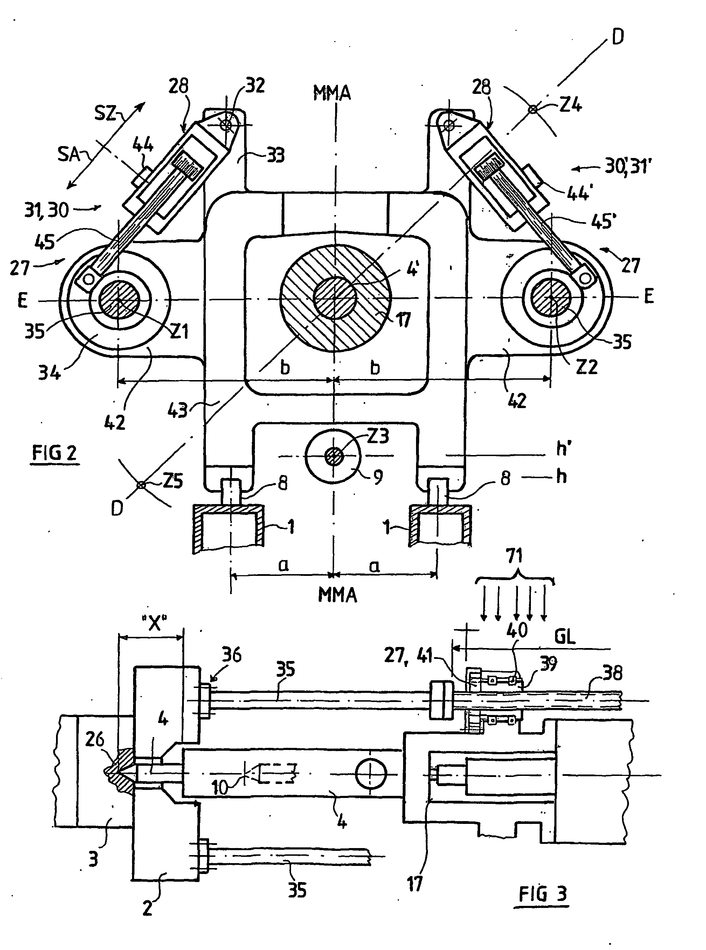

Die Figuren 2 und 3 zeigen ein Ausführungsbeispiel für den Anpressantrieb 31 für Spritzgiessmaschinen, bei denen das Mass "X" variieren kann. Mit MMA-MMA ist die Maschinenmittenachse bezeichnet, welche gleichzeitig die Achse der Spritzdüse 4 enthält. Der Pneumatikzylinder 9 ist mittig, wie auch mit den Distanzangaben a, a zum Ausdruck kommt, etwa in dem Bereich h, h' der zwei Führungsschienen 8. Links und rechts von der Spritzdüse 4 befinden sich die Antriebsmittel 30 bzw. 30' für den Anpressantrieb 31, 31', welche als zwei identische Pneumatikzylinder ausgebildet sind. Die Pneumatikzylinder 28, 28' sind je über einen Drehbolzen 32 am hinteren Ende an einem Flansch 33 angelenkt, so dass die Zylinder eine leichte Verschwenkbewegung durchführen können. Die Kolbenstangen 45, 45' sind ebenfalls gelenkig im Eingriff mit einer Kupplung 34, welche synchron in Wirkverbindung mit dem entsprechenden Zuganker bzw. der Zugstange 35 auf jeder Seite der Spritzdüse treten kann. Die zwei Zugstangen 35 sind in Bezug auf die Mittelebene MMA symmetrisch und auf gleicher Höhe wie die Achse 4' der Spritzdüse 4 und bilden mit dieser eine gemeinsame Horizontalebene E - E. Wie aus der Figur 2 ersichtlich ist, bilden die jeweiligen Zentren Z1, Z2 und Z3 der zwei Zugstangen 35 mit den Antriebsmitteln 30 ein Dreieck. Alle drei Achsen sind parallel geführt zu der Achse 4' der Plastifizierschnecke 17. Wie aus der Figur 3 ersichtlich ist, sind die Zugstangen 35 auf der Spritzseite als blosses Stangenmaterial sinngemäss zu der Kolbenstange 20 über Flanschen 36 mit der Aufspannplatte 2 starr verbunden. Auf der Antriebsseite weist jede Zugstange 35 eine Gewindespindel 38 auf. Die Gewindespindeln können als leichtgängige Kugel- oder Rollenspindeln ausgebildet sein. Entsprechend wird auf der Kugel- oder Rollenspindel je eine Kugel- oder ein Rollenübertrieb 39 geführt. Die entsprechenden Muttern können entweder über eine normale Kugellagerung 40 frei drehen, oder aber, wenn eine Kupplung 41 eingekuppelt ist, in eine kraftschlüssige Wirkverbindung mit den Antrieben 30, 30' gebracht werden. Die Muttern sind in Lagerstellen 42 eines festen Gehäuseteils 43 der Spritzeinheit 6 längsspielfrei gelagert. Mit den Muttern verschraubt ist eine innere Hälfte der Kupplung (oder Bremse) 41, deren äussere Hälfte magnetisch oder pneumatisch mit der inneren Hälfte gekuppelt werden kann. In der Figur 3 ist mit mehreren Pfeilen 71 angedeutet, dass der Kupplungsvorgang über der Länge der Gewindespindel an beliebiger Stelle durchgeführt werden kann. Damit können Variationen des Masses "X" kompensiert werden.

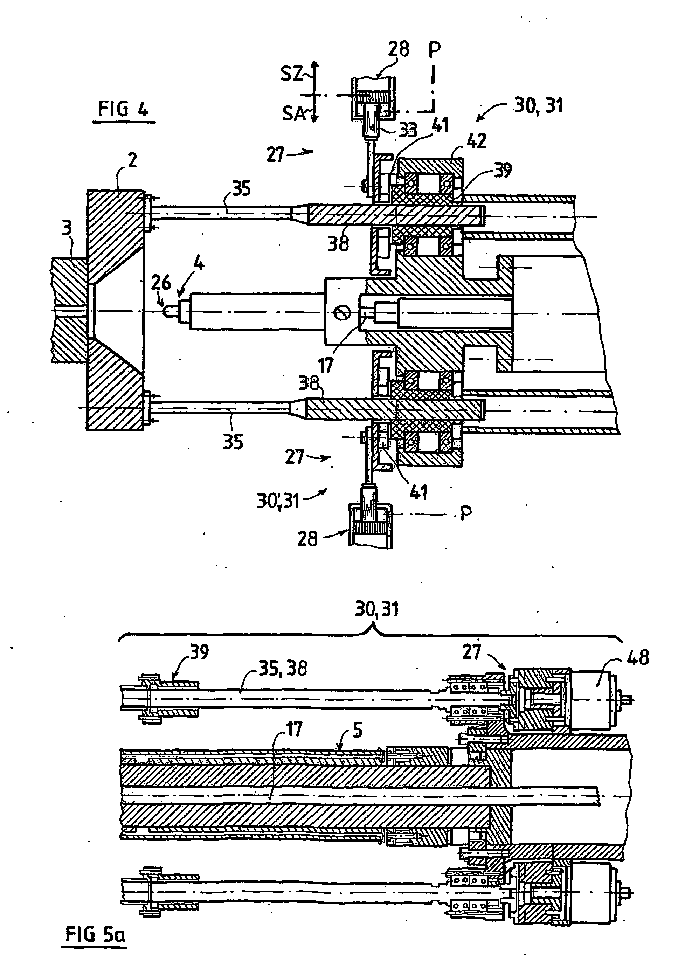

In der Figur 2 und 4 sind die Antriebsmittel 30 durch zwei Pneumatikzylinder dargestellt, welche gelenkig zwischen dem Gehäuse und der Kupplungshälfte angeordnet sind. Der Kolben befindet sich in einer Ausgangsstellung, die durch den Zylinderschalter 44 erkannt wird. In der gezeichneten, linken Schnitthälfte muss die Steigung der Gewindespindel rechtsgängig sein, damit beim Ausfahren des Kolbens das Aggregat und damit die Düse gegen das Werkzeug gepresst wird. Bei der symmetrischen Anordnung der rechten Schnitthälfte muss die rechte Gewindespindel linksgängig sein.
1. Verschieben des Aggregates (Figuren 1 und 4):
   Die Kupplung 41 ist geöffnet; die Muttern können frei drehen
   1.1 Bewegung nach hinten:
      - die Zylinder 28 werden entlastet
      - die Kupplungen 41 sind offen und
      - das Aggregat kann mittels Zylinder 9 in eine beliebige Stellung fahren (Fig. 1)
   1.2 Bewegung nach vorne:
      - die Zylinder 28 sind immer noch entlastet
      - die Kupplungen 41 sind noch offen
      - das Aggregat fährt mit Zylinder 9 bis zur Düsenanlage
   2. Düse Anpressen (Figur 3):
      - die Kupplungen 41 werden geschlossen
      - die Zylinder 28 werden belüftet
      - die Zylinder 28 fahren gegen Hub SA und bewirken die Anpressung.

Anstatt dass die beiden Zugstangen 35 zusammen mit der Düsenachse in einer Horizontalebene liegen, können diese z.B. auch diagonal angeordnet werden, wie mit der diagonalen Linie D - D sowie den beiden Zentren Z4 bzw. Z5 in Figur 2 angedeutet ist. Vorteilhaft ist, wenn der Verschiebeantrieb 29 im unteren Bereich des Spritzaggregates 7 und die beiden Anpressantriebe 31 symmetrisch zu der Spritzachse in einer gemeinsamen Ebene E - E oder D - D liegen.

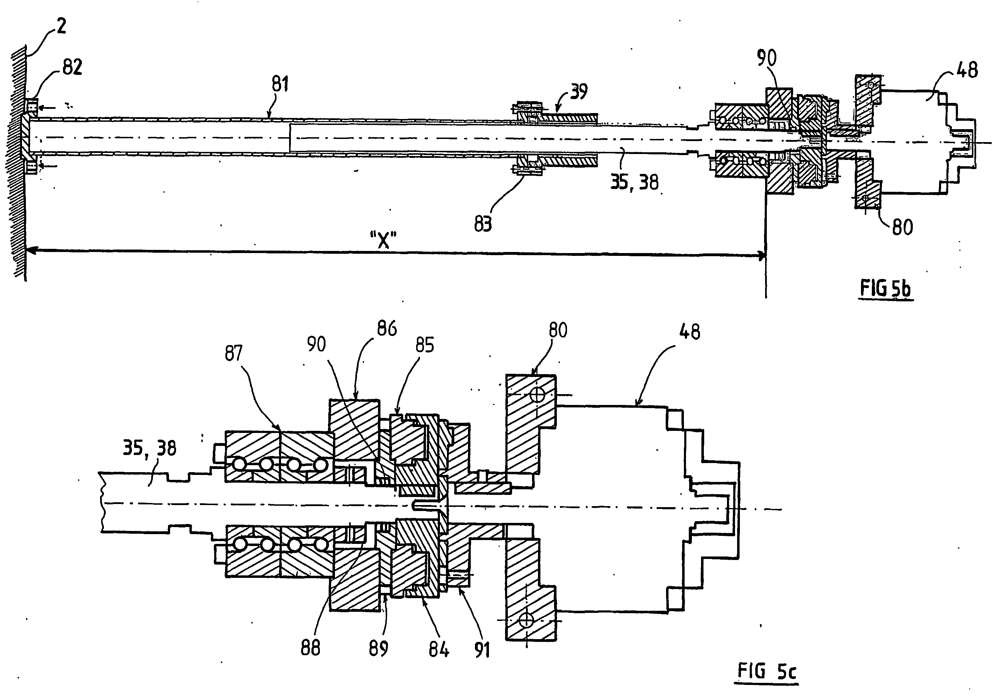

Die Figuren 5a und 5b zeigen zeigt als Alternative zu den Figuren 2 bis 4 einen Schwenkflügelantrieb 48, der keine Querkräfte erzeugt und eine kompaktere Bauweise erlaubt.

Der Schwenkflügelantrieb 48 weist einen pneumatischen Schwenkantrieb mit Signalgeberaufsatz und ist mit einem Halter 80 verbunden. Der Schwenkflügelantrieb 48 verspannt über der Kugelgewindespindel 35, 38 / Kugelgewindemutter 39 das Spritzaggregat 7 mit der Werkzeugaufspannplatte 2. Die Kugelgewindemutter 39 ist über ein Rohr 81 und über einen Flnasch 82 an der Werkzeugaufspannplatte 2 befestigt. Eine Drehbewegung der Kugelspindel 35, 38 verändert das Mass "X" zwischen dem Spritzaggregat 7 sowie der Werkzeugaufspannplatte 2. Entsprechend dringt die Kugelgewindespindel 35, 38 mehr oder weniger tief in das Rohr 81. Das Rohr 81 ist mit Flansch 83 fix mit der Kugelgewindemutter 39 verbunden. Der Schwenkflügelantrieb 48 ist über eine Kupplung bzw. Ankerscheibe 84 verbunden und greift über ein Kupplungsteil 85 bzw. Stator mit Elektromagnet ein. Das Kupplungsteil 85 ist über einen Flansch 86 an dem Spritzaggregat 7 verbunden. Das Kupplungsteil 85 weist eine Lagerung 87 mit Nutmutter 88 auf, welche über ein Zwischenstück 89 mit Wellendichtung 90 mit dem Kupplungsteil 85 verbunden ist. Der Schwenkflügelantrieb 48 ist über einen Flansch 91 sowie eine Ankerscheibe 92 mit dem Kupplungsteil 85 verbunden. Die Verstellfunktion erfolgt nach Einschalten des Schwenkflügelantriebes 48 sowie Einkuppeln der Kupplungsteile 84, 85. Eine enorme Übersetzung erfolgt über die Kugelgewindemutter 39, so dass über den pneumatischen Schwenkflügelantrieb 48 die enormen Kräfte für das Anpressen der Spritzdüse gegen das Werkzeug gewährleistet wird.

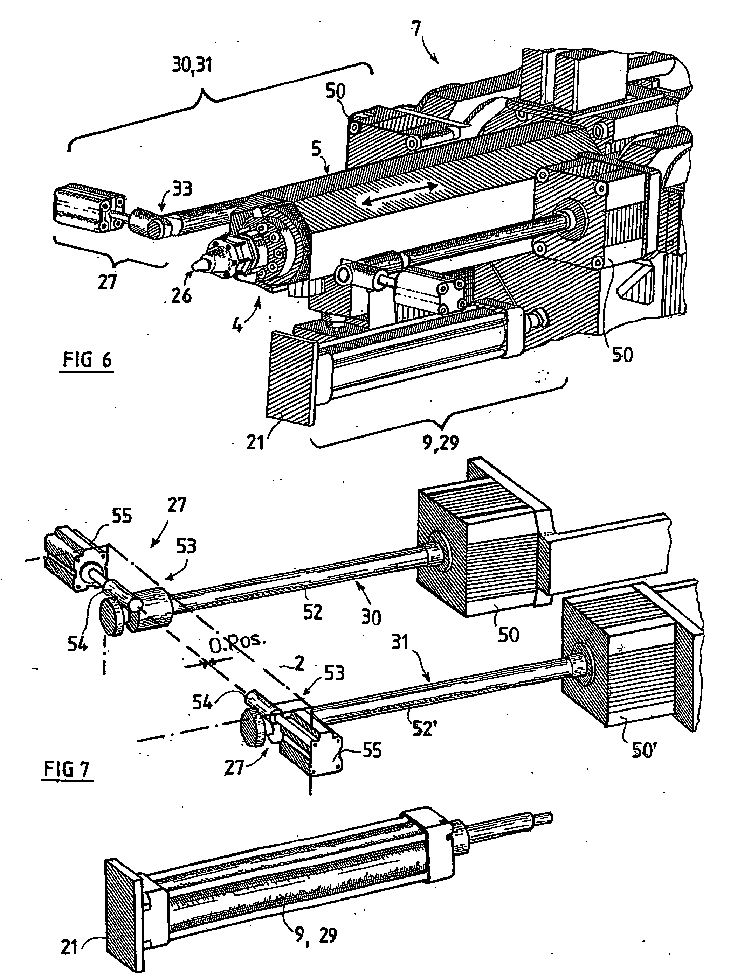

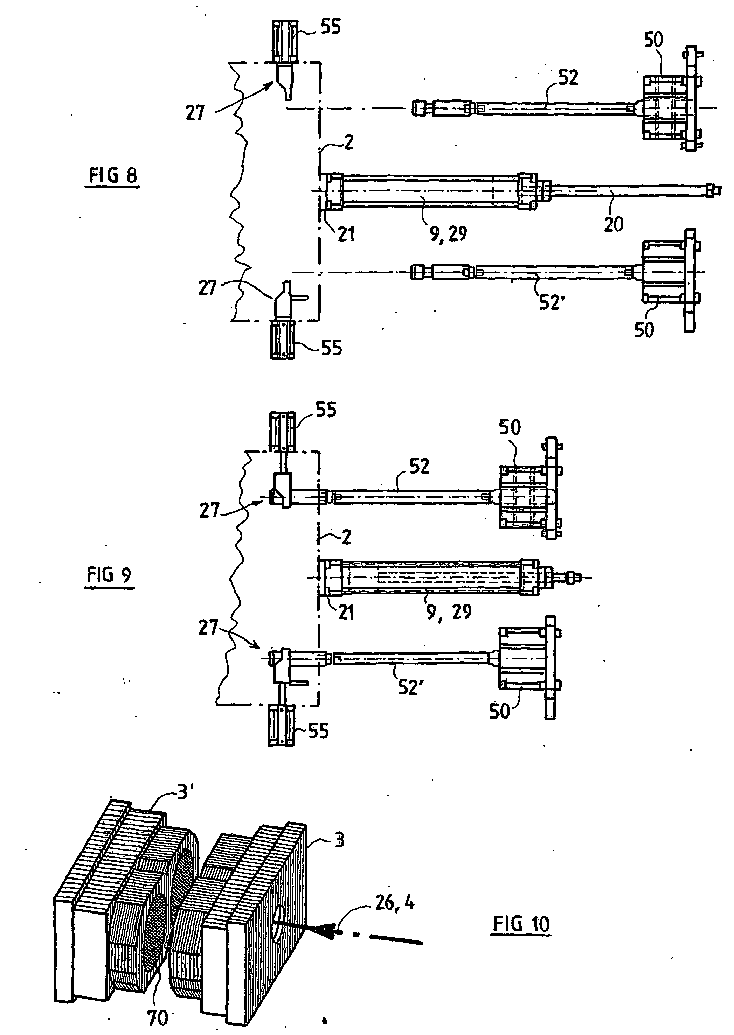

Während einer ganzen Tagesproduktion kann der Spritzantrieb als einziger aktiv sein und die entsprechenden Mikrobewegungen für jeden einzelnen Spritzzyklus sicherstellen. Die Figuren 6 bis 10 zeigen eine reine Zylinderlösung, bevorzugt Pneumatikzylinder. Zur Vereinfachung sind die selben Funktionselemente wie in den vorangegangenen Beispielen mit den selben Bezugsziffern versehen worden. Für den Spritzantrieb ist beidseits der Spritzdüse 4 je ein grossflächer Pneumatikzylinder 50, 50' vorgesehen, welcher über eine entsprechend lange Kolbenstange 52, 52' in entsprechende Bohrungen der Aufspannplatte 2 einfahren kann, derart, dass bei Erreichen einer O-Position (O-Pos.) eine quer dazu geführte Verriegelung 53 aktiviert werden kann. Da es sich um eine rein pneumatische Lösung handelt, werden auch die Sicherungsbolzen 54 von kleinen Verriegelungszylindern 55 betätigt. Die Figur 7 zeigt die verriegelte oder die eigentliche Arbeitsstellung. Die Anlegekraft der Düse 26 wird über die Pneumatikzylinder 50 eingestellt. Die Figur 8 zeigt die Extremposition für die rückwärtige Lage des ganzen Spritzaggregates. Die Kolbenstange 20 ist vollständig ausgefahren.

Die Figur 10 zeigt als Beispiel die beiden Formhälften 3, 3' für die Herstellung von Kompakt Discs 70.

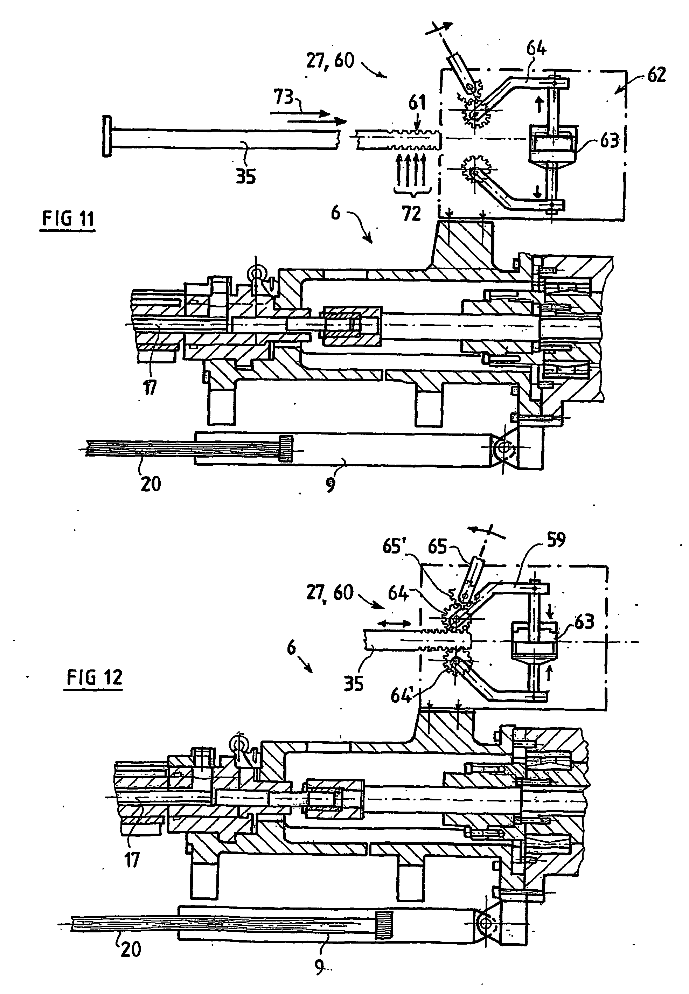

Die Figuren 11 und 12 zeigen als eine weitere Ausgestaltung für den Anpressantrieb 31 einen Zahnstangenübertrieb 60. Am Ende der Zugstangen 35 weist dieser beidsetis eine Verzahnung 61 auf. Die Zahnstange bzw. deren Fortsetzung als Zugstange ist sinngemäss etwa zu der Figur 3 in der Werkzeugaufspannplatte 2 verankert. Die Kupplungsfunktion geschieht hier in dem hinteren Bereich der Spritzeinheit 6. Der Zahnstangenübertrieb 60 weist eine Kupplung 62 mit einem Kurzhubzylinder 63 auf, mit beidseits je einem abgelenkten Hebel 59 und je einem Ritzel 64, 64' für den Eingriff in die Verzahnung 61. Die Figur 11 zeigt die ausgekuppelte Stellung für das Verfahren des Aggregates. Das Spritzaggregat 7 wird über den Pneumatikzylinder 9 in die Verriegelungsposition gefahren (wählbare Position gemäss Pfeilen 72, Doppelpfeil 73). Durch Betätigung des Kurzhubzylinders 63 werden die Ritzel 64, 64' in Eingriff mit der Verzahnung 61 gebracht (Figur 12). Über einen Drehhebel 65 mit Zahneingriffen 65' werden die Ritzel 64, 64' für die erforderlichen Mikrobewegungen und den Druckaufbau angetrieben. Der Drehhebel 65 kann sinngemäss zu der Lösung gemäss Figur 2 angetrieben werden.

Bei allen gezeigten Lösungen ist die getrennte und unabhängige Steuerbarkeit für das Zufahren/Wegfahren sowie für das eigentliche Arbeiten für den Spritzgiessprozess eine wichtige Voraussetzung.

## Patentansprüche

1. Verfahren zum gesteuerten An- und Wegfahren des Spritzaggregates (7) einer Spritzgiessmaschine mittels eines Verschiebeantriebes und Anpressen der Spritzdüse (4) gegen das Werkzeug bzw. die Form (3) für die Spritzarbeit mittels eines Anpressantriebes (29), wobei das Anfahren und Wegfahren sowie das Anpressen getrennt und unabhängig gesteuert werden
**dadurch gekennzeichnet,**
**dass** der Anpressantrieb (31) für die Spritzarbeit eingekuppelt wird und im Automatikbetrieb eingekuppelt bleibt und die erforderliche Anpresskraft und die erforderlichen Bewegungen, für ein zyklisches Anpressen einerseits und einen thermischen Kontaktunterbruch oder das Herstellen eines kleinen Spaltes zwischen Spritzdüse und Form andererseits vom Anpressantrieb sichergestellt wird.

2. Verfahren nach Anspruch 1,
**dadurch gekennzeichnet,**
**dass** über die schaltbare Kupplung (34, 41, 62) für den Anpressantrieb (31) ein möglichst spielfreier Kraftschluss zwischen der Spritzdüse (4) einerseits und der Form (3) andererseits und durch das Einkuppeln eine definierte Ausgangslage bzw. NullLage für den Anpressantrieb (31) hergestellt wird.

3. Verfahren nach Anspruch 1 oder 2,
**dadurch gekennzeichnet,**
**dass** die Düsenanpresskraft in Bezug auf den Verlauf der Spritzkraft oder des Spritzdruckverlaufes eingestellt bzw. geregelt wird.

4. Verfahren nach einem der Ansprüche 1 bis 3,
**dadurch gekennzeichnet,**
**dass** die Steuerfunktion "Anpressen" einen minimalen Verschiebeweg oder Mikrobewegungen der Spritzdüse (4) und das Aufbringen einer grossen Kraft bzw. Vorspannkraft umfasst, über den Anpressantrieb (31) erfolgt und dass die Steuerfunktion "An- und Wegfahren" eine kleine Kraft und einen grossen Verschiebeweg umfasst und über den Verschiebeantrieb (29) erfolgt.

5. Verfahren nach einem der Ansprüche 1 bis 4,
**dadurch gekennzeichnet,**
**dass** die Steuerfunktion "Anpressen" einen normalen Automatikbetrieb mit Daueranpressung oder einen zyklischen Kraftaufbau für Anpressen für jeden Schuss und/oder einen thermischen Kontaktunterbruch und/oder die Herstellung eines kleinen Spaltes zwischen Spritzdüse (4) und Form (3) umfasst.

6. Verfahren nach einem der Ansprüche 1 bis 5,
**dadurch gekennzeichnet,**
**dass** die Steuerfunktion "An- und Wegfahren" durch Aktivierung eines Hilfsantriebes erfolgt, wobei das Spritzaggregat (7) einerseits zurückgefahren und andererseits mit der Spritzdüse (4) in einen definierten Positionsbereich für den Kupplungsvorgang gefahren wird.

7. Spritzaggregat mit steuerbaren Antriebsmitteln (30) für das Verschieben des Spritzaggregates (7) gegenüber dem Ständer einer Spritzgiessmaschine sowie das Anpressen der Spritzdüse (4) gegen die Form (3) für einen Automatikbetrieb, mit zwei unabhängig aktivierbaren Antrieben, einem Anpressantrieb (31) für den Aufbau der Anpresskraft für die Spritzarbeit sowie einem Verschiebeantrieb (29) für den grossen Verschiebeweg des Spritzaggregates (7),
**dadurch gekennzeichnet,**
**dass** dem Anpressantrieb (31) eine steuerbare Kupplungsmechanik (2) zugeordnet und ein möglichst spielfreier Kraftschluss zwischen Spritzdüse (4) und Form (3) herstellbar ist, wobei die Bewegungen während dem Automatikbetrieb, das zyklische Anpressen einerseits, einen thermischen Kontaktunterbruch oder das Herstellen eines kleinen Spaltes zwischen Spritzdüse und Form andererseits, vom Anpressantrieb sicherstellbar sind.

8. Spritzaggregat nach Anspruch 7,
**dadurch gekennzeichnet,**
**dass** der Anpressantrieb (31) und der Verschiebeantrieb (29) je eigene mechanische Verbindungselemente aufweisen zur unabhängigen Herstellung eines Kraftschlusses zwischen Spritzdüse (4) und Form (3).

9. Spritzaggregat nach Anspruch 7 oder 8,
**dadurch gekennzeichnet,**
**dass** der Anpressantrieb (31) eine Zugankerung umfasst zur kraftschlüssigen Verbindung von Spritzaggregat (7) und Form (3), wobei die Zugankerung insbesondere aus zwei Zugstangen (35) gebildet ist, welche beidseits des Spritzaggregates (7) parallel und symmetrisch zur Spritzachse angeordnet sind, derart, dass deren Achsen und die Achse der Spritzschnecke eine gemeinsame Ebene bilden.

10. Spritzaggregat nach Anspruch 9,
**dadurch gekennzeichnet,**
**dass** der Anpressantrieb (31) zwei koordiniert einkuppelbare Antriebselemente aufweist, welche je einer Zugstange (35) zugeordnet sind.

11. Spritzaggregat nach einem der Ansprüche 7 bis 10,
**dadurch gekennzeichnet,**
**dass** der Verschiebeantrieb (29) als Hilfsantrieb ausgebildet, unabhängig des Anpressantriebes (31) aktivierbar ist und Steuerungsmittel aufweist zum Verfahren an definierbare Positionen, insbesondere an die beiden Endpositionen für das Einkuppeln des Anpressantriebes.

12. Spritzaggregat nach Anspruch 11,
**dadurch gekennzeichnet,**
**dass** der Verschiebeantrieb (29) einen Zahnstangenantrieb oder einen pneumatischen Antrieb aufweist.

13. Spritzaggregat nach Anspruch 12,
**dadurch gekennzeichnet,**
**dass** der pneumatische Antrieb wenigstens einen vorzugsweise zwischen dem Spritzaggregat (7) und der Aufspannplatte (2) fest verankerten Pneumatikzylinder (9) aufweist, wobei die Kolbenstange (20) und der Zylinder einerseits fest und andererseits gelenking befestigt sind.

14. Spritzaggregat nach einem der Ansprüche 7 bis 13,
**dadurch gekennzeichnet, dass** der Anpressantrieb (31) wenigstens zwei Antriebselemente aufweist, welche als Hydraulikzylinder oder als grossflächige Pneumatikzylinder (50, 50') ausgebildet sind.

15. Spritzaggregat Anspruch 14,
**dadurch gekennzeichnet,**
**dass** die steuerbare Kupplungsmechanik (27) zwei Verriegelungszylinder (55) aufweist, über welche mittels eines verschiebbaren Dornes oder Konus' bzw. einer verschiebbaren Klaue (57) ein spielfreier Kraftschluss zwischen Form (3) und Hydraulikzylinder bzw. grossflächigem Pneumatikzylinder (50, 50') herstellbar ist.

16. Spritzaggregat nach Anspruch 15,
**dadurch gekennzeichnet,**
**dass** die Verriegelungszylinder (55) formseitig fix oder mit kleinem Verstellbereich verankert sind.

17. Spritzaagregat nach einem der Ansprüche 7 bis 13,
**dadurch gekennzeichnet,**
**dass** der Anpressantrieb (31) einen Kugel- oder Rollenübertrieb (39) aufweist und die Steuerfunktion "Anpressen" nach Einkuppeln des Anpressantriebes (31) an wählbarer Längsposition des Kugel- oder Rollenübertriebes (39) aktivierbar ist.

18. Spritzaggregat nach Anspruch 17,
**dadurch gekennzeichnet,**
**dass** die steuerbare Kupplungsmechanik (27) dem Kurbel- oder Rollenübertrieb (39) zugeordnet ist mit entsprechender Freilaufbewegung oder zwangsweiser Kraftübertragung durch den Anpressantrieb (31).

19. Spritzaggregat nach einem der Ansprüche 17 oder 18,
**dadurch gekennzeichnet,**
**dass** der Anpressantrieb (31) einen steuerbaren pneumatischen Zylinder (28) oder einen steuerbaren pneumatischen Einfach- oder Doppeldrehflügel aufweist.

20. Spritzaggregat nach einem der Ansprüche 7 bis 13,
**dadurch gekennzeichnet,**
**dass** der Anpressantrieb (31) einen Zahnstangenübertrieb aufweist und die Steuerfunktion "Anpressen" nach Einkuppeln des Anpressantriebes (31) an wählbarer Längsposition des Zahnstangenübertriebes aktivierbar ist.

21. Spritzaggregat nach Anspruch 20,
**dadurch gekennzeichnet,**
**dass** für die Betätigung der Kupplungsmechanik (27) und für den Kraftaufbau des Anpressantriebes (31) je gesondert steuerbare Verriegelungszylinder (55) vorgesehen sind.

22. Spritzaggregat nach Anspruch 20 oder 21,
**dadurch gekennzeichnet,**
**dass** der Zahnstangenübertrieb zwei, beidseits des Spritzaggregates (7) parallel und symmetrisch zur Spritzachse angeordnete Doppelzahnstangen aufweist.

23. Spritzaggregat nach einem der Ansprüche 7 bis 22,
**dadurch gekennzeichnet,**
**dass** das Spritzaggregat (7) auf zwei seitlichen Führungen abgestützt, parallel zur Achse der Spritzschnecke bewegbar ist und die Antriebsvorrichtung für das Fahren mittig, etwa auf der Höhe der zwei Führungen, angeordnet ist, wobei ein Verschiebeantrieb (29) in der Maschinenmitte und etwa auf der Höhe der zwei seitlichen Führungen für die Aggregatbewegung und die Düsenanpressung durch zwei symmetrisch zur Düsenachse, etwa auf der Höhe der Düsenachse angeordnete Zugstangen (35) angreifen.

24. Spritzaggregat nach einem der Ansprüche 7 bis 23,
**dadurch gekennzeichnet,**
**dass** ihm Steuerungsmittel zugeordnet sind für die Wahl verschiedener Betriebsweisen:
- ein Automatikbetrieb mit Daueranpressung während dem ganzen Spritzbetrieb,
- ein Automatikbetrieb mit zyklischem Anpressen und thermischem Kontaktunterbruch oder Herstellen eines Spaltes zwischen Spritzdüse (4) und Form (3),
- ein Hand- oder Testbetrieb mit wählbarer Betriebsweise
- ein Servicebetrieb ,
wobei je nach momentaner Betriebsweise der Anpressantrieb (31) oder der Verschiebeantrieb (29) aktiviert, der jeweils inaktive Teil ausgekuppelt bzw. ausgeschaltet ist und die Spritzgiessmaschine vorzugsweise eine horizontal arbeitende Kunststoffspritzgiessmaschine ist.

## Claims

1. Method for the controlled advancing and withdrawal of the injection unit (7) of an injection-moulding machine by means of a displacement drive and pressing of the injection nozzle (4) against the tool or the mould (3) for the injection work by means of a pressing drive (29), the advancing and the withdrawal as well as the pressing being controlled separately and independently of one another, **characterised in that** the pressing drive (31) for the injection work is coupled and remains coupled in the automatic mode and the required pressing force and the required movements for a cyclic pressing, on the one hand, and a thermal contact interruption or the production of a small gap between the injection nozzle and the mould, on the other hand, are ensured by the pressing drive.

2. Method according to claim 1, **characterised in that** a non-positive connection, which is as play-free as possible, is produced between the injection nozzle (4) on the one hand and the mould (3) on the other hand via the engaging and disengaging coupling (34, 41, 62) for the pressing drive (31) and a defined initial position or neutral position is produced for the pressing drive (31) as a result of the coupling.

3. Method according to either claim 1 or claim 2, **characterised in that** the nozzle pressing force is adjusted or controlled relative to the course of the injection force or the injection pressure course.

4. Method according to any one of claims 1 to 3, **characterised in that** the control function "pressing" comprises a minimum displacement path or micromotions of the injection nozzle (4) and the application of a large force or preload force is carried out via the pressing drive (31) and **in that** the control function "advance and withdrawal" comprises a small force and a long displacement path and is carried out via the displacement drive (29).

5. Method according to any one of claims 1 to 4, **characterised in that** the control function "pressing" comprises a normal automatic mode with continuous pressing or a cyclic force build-up for pressing for each injection and/or a thermal contact interruption and/or the production of a small gap between the injection nozzle (4) and the mould (3).

6. Method according to any one of claims 1 to 5, **characterised in that** the control function "advance and withdrawal" is carried out as a result of the activation of an accessory drive, the injection unit (7) being, on the one hand, withdrawn and, on the other hand, being guided with the injection nozzle (4) in a defined position region for the coupling process.

7. Injection unit having controllable drive means (30) for the displacement of the injection unit (7) relative to the support of an injection-moulding machine and the pressing of the injection nozzle (4) against the mould (3) for an automatic mode, with two independently activatable drives, a pressing drive (31) for the build-up of the pressing force for the injection work as well a displacement drive (29) for the long displacement path of the injection unit (7), **characterised in that** a controllable coupling mechanism (2) is associated with the pressing drive (31) and a non-positive connection, which is a play-free as possible, can be produced between the injection nozzle (4) and the mould (3), wherein the movements during the automatic mode, the cyclic pressing, on the one hand, a thermal contact interruption or the production of a small gap between the injection nozzle and the mould, on the other hand, can be ensured by the pressing drive.

8. Injection unit according to claim 7, **characterised in that** the pressing drive (31) and the displacement drive (29) each comprise their own mechanical connecting elements for the independent production of a non-positive connection between the injection nozzle (4) and the mould (3).

9. Injection unit according to either claim 7 or claim 8, **characterised in that** the pressing drive (31) comprises a tie rod means for the non-positive connection of the injection unit (7) and the mould (3), the tie rod means consisting in particular, of two connecting rods (35), which are arranged parallel and symmetrically to the injection axis on both sides of the injection unit (7), such that the axes of the two connecting rods and the axis of the injection screw form a common plane.

10. Injection unit according to claim 9, **characterised in that** the pressing drive (31) comprises two coordinated couplable actuators, which are each associated with a connecting rod (35).

11. Injection unit according to any one of claims 7 to 10, **characterised in that** the displacement drive (29) is configured as an auxiliary drive, can be activated irrespectively of the pressing drive (31) and comprises control means for moving to definable positions, in particular to the two end positions for the coupling of the pressing drive.

12. Injection unit according to claim 11, **characterised in that** the displacement drive (29) comprises a rack drive or a pneumatic drive.

13. Injection unit according to claim 12, **characterised in that** the pneumatic drive comprises at least one pneumatic cylinder (9) which is preferably rigidly anchored between the injection unit (7) and the platen (2), the piston rod (20) and the cylinder being attached both rigidly and in an articulated manner.

14. Injection unit according to any one of claims 7 to 13, **characterised in that** the pressing drive (31) comprises at least two drive elements, which are configured as hydraulic cylinders or as pneumatic cylinders (50, 50') having a large surface area.

15. Injection unit according to claim 14, **characterised in that** the controllable coupling mechanism (27) comprises two locking cylinders (55), via which a non-positive connection, which is as play-free as possible, can be produced between the mould (3) and the hydraulic cylinder or the pneumatic cylinder (50, 50') having a large surface area by means of a displaceable mandrel or cone or a displaceable claw (57).

16. Injection unit according to claim 15, **characterised in that** the locking cylinders (55) are anchored rigidly or with a small adjustment range on the side of the mould.

17. Injection unit according to any one of claims 7 to 13, **characterised in that** the pressing drive (31) comprises a ball or roll overdrive (39) and the control function "pressing" can be activated, after the coupling of the pressing drive (31), at a selectable longitudinal position of the ball or roll overdrive (39).

18. Injection unit according to claim 17, **characterised in that** the controllable coupling mechanism (27) is associated with the crank or roll overdrive (39) with corresponding free-running movement or compulsory force transfer by means of the pressing drive (31).

19. Injection unit according to either claim 17 or claim 18, **characterised in that** the pressing drive (31) comprises a controllable pneumatic cylinder (28) or a controllable pneumatic single or double rotary wing.

20. Injection unit according to any one of claims 7 to 13, **characterised in that** the pressing drive (31) comprises a rack overdrive and the control function "pressing" can be activated, after the coupling of the pressing drive (31), at a selectable longitudinal position of the rack overdrive.

21. Injection unit according to claim 20, **characterised in that** respective separately controllable locking cylinders (55) are provided for the actuation of the coupling mechanism (27) and for the build-up of force of the pressing drive (31).

22. Injection unit according to either claim 20 or claim 21, **characterised in that** the rack overdrive comprises two double racks arranged parallel and symmetrically to the injection axis on both sides of the injection unit (7).

23. Injection unit according to any one of claims 7 to 22, **characterised in that** the injection unit (7) is supported on two lateral guides and is movable parallel to the axis of the injection screw, and the drive device is arranged centrally, approximately at the height of the two guides, for driving, a displacement drive (29) acting in the centre of the machine and approximately at the height of the two lateral guides for the unit movement and the nozzle pressing acting by means of two connecting rods (35) arranged symmetrically to the nozzle axis, approximately at the level of the nozzle axis.

24. Injection unit according to any one of claims 7 to 23, **characterised in that** control means for the selection of various operating modes are associated therewith:
- an automatic mode with continuous pressing during the entire injection operation;
- an automatic mode with cyclic pressing and thermal contact interruption or production of a gap between the injection nozzle (4) and the mould (3);
- a manual or test mode with selectable operating mode;
- a service mode,
the pressing drive (31) or the displacement drive (29) being activated, depending on the present mode of operation, the respectively inactive part being uncoupled or switched off and the injection-moulding machine preferably being a horizontally working plastics material injection-moulding machine.

## Revendications

1. Procédé de mise en place et d'enlèvement commandés, à l'aide d'un système d'entraînement pour le déplacement, de l'unité d'injection (7) d'une machine de moulage par injection et de la mise en appui, à l'aide d'un système d'entraînement pour la mise en appui (29), de la tuyère d'injection (4) contre l'outil ou contre le moule (3) pour le travail d'injection, la mise en place et l'enlèvement ainsi que la mise en appui étant commandés séparément et de manière indépendante, **caractérisé en ce que** le système d'entraînement pour la mise en appui (31) pour le travail d'injection est mis en accouplement et reste accouplé en mode automatique et **en ce que** la force d'appui nécessaire et les mouvements nécessaires pour une mise en appui cyclique d'une part et pour une interruption du contact thermique ou pour la création d'une petite fente entre la tuyère d'injection et le moule d'autre part sont fournis par le système d'entraînement pour la mise en appui.

2. Procédé selon la revendication 1, **caractérisé en ce qu'**une liaison en complémentarité de force autant que possible sans jeu entre la tuyère d'injection (4) d'une part et le moule (3) d'autre part est réalisée par l'intermédiaire de l'accouplement commutable (34, 41, 62) pour le système d'entraînement pour la mise en appui (31) et **en ce qu'**une position de départ ou une position zéro définie est réalisée pour le système d'entraînement pour la mise en appui (31) au moyen de la mise en accouplement.

3. Procédé selon la revendication 1 ou 2,
**caractérisé en ce que** la force d'appui de la tuyère est réglée ou régulée en fonction de l'évolution de la force d'injection ou de l'évolution de la pression d'injection.

4. Procédé selon l'une quelconque des revendications 1 à 3, **caractérisé en ce que** la fonction de commande "mise en appui" comprend un trajet de déplacement minimal ou des micro-déplacements de la tuyère d'injection (4) et l'application d'un force ou d'une force de précontrainte importante et est effectuée par l'intermédiaire du système d'entraînement pour la mise en appui (31) et **en ce que** la fonction de commande "mise en place et enlèvement" comprend une force peu importante et un grand trajet de déplacement et est effectuée par l'intermédiaire du système d'entraînement pour le déplacement (29).

5. Procédé selon l'une quelconque des revendications 1 à 4, **caractérisé en ce que** la fonction de commande "mise en appui" comprend un mode automatique normal avec une mise en appui permanente ou une constitution cyclique de la force pour la mise en appui pour chaque décharge et/ou une interruption du contact thermique et/ou la création d'une petite fente entre la tuyère d'injection (4) et le moule (3).

6. Procédé selon l'une quelconque des revendications 1 à 5, **caractérisé en ce que** la fonction de commande "mise en place et enlèvement" a lieu par une activation d'un système d'entraînement auxiliaire, l'unité d'injection (7) étant d'une part ramenée en arrière et d'autre part placée avec la tuyère d'injection (4) dans une zone de position définie pour l'opération de mise en accouplement.

7. Unité d'injection avec des moyens d'entraînement (30) pouvant être commandés pour le déplacement de l'unité d'injection (7) par rapport au support d'une machine de moulage par injection ainsi que pour la mise en appui de la tuyère d'injection (4) contre le moule (3) pour un mode automatique, avec deux systèmes d'entraînement pouvant être activés de manière indépendante, avec un système d'entraînement de la mise en appui (31) pour la constitution de la force de la mise en appui pour le travail d'injection ainsi qu'avec un système d'entraînement pour le déplacement (29) pour le grand trajet de déplacement de l'unité d'injection (7), **caractérisée en ce qu'**un mécanisme d'accouplement (2) pouvant être commandé est associé au système d'entraînement pour la mise en appui (31) et qu'il est possible de réaliser une liaison en complémentarité de force autant que possible sans jeu entre la tuyère d'injection (4) et le moule (3), alors que les mouvements pendant le mode automatique et la mise en appui cyclique d'une part et une interruption du contact thermique ou la création d'une petite fente entre la tuyère d'injection et le moule d'autre part peuvent être fournis par le système d'entraînement pour la mise en appui.

8. Unité d'injection selon la revendication 7, **caractérisée en ce que** le système d'entraînement pour la mise en appui (31) et le système d'entraînement pour le déplacement (29) comprennent respectivement des éléments mécaniques de liaison propres pour la réalisation indépendante d'une liaison en complémentarité de force entre la tuyère d'injection (4) et le moule (3).

9. Unité d'injection selon la revendication 7 ou 8, **caractérisée en ce que** le système d'entraînement pour la mise en appui (31) comprend un ancrage de traction pour réaliser une liaison en complémentarité de force entre l'unité d'injection (7) et le moule (3), l'ancrage de traction étant en particulier formé de deux barres de traction (35), lesquelles sont disposées parallèlement et de manière symétrique à l'axe d'injection des deux côtés de l'unité d'injection (7), et ceci de telle façon que leurs axes et l'axe de la vis sans fin d'injection forment un plan commun.

10. Unité d'injection selon la revendication 9, **caractérisée en ce que** le système d'entraînement pour la mise en appui (31) comprend deux éléments d'entraînement pouvant être mis en accouplement de manière coordonnée et qui sont respectivement associés à une barre de traction (35).

11. Unité d'injection selon l'une quelconque des revendications 7 à 10, **caractérisée en ce que** le système d'entraînement pour le déplacement (29) est configuré comme système d'entraînement auxiliaire, qu'il peut être activé indépendamment du système d'entraînement pour la mise en appui (31) et qu'il comprend des moyens de commande pour un déplacement dans des positions pouvant être définies, en particulier dans les deux positions extrêmes pour la mise en accouplement du système d'entraînement pour la mise en appui.

12. Unité d'injection selon la revendication 11, **caractérisée en ce que** le système d'entraînement pour le déplacement (29) comprend un système d'entraînement à crémaillère ou un système d'entraînement pneumatique.

13. Unité d'injection selon la revendication 12, **caractérisée en ce que** le système d'entraînement pneumatique comprend au moins un vérin pneumatique (9) ancré de manière fixe et disposé de préférence entre l'unité d'injection (7) et la plaque de montage (2), la tige de piston (20) et le vérin étant fixés d'un côté de manière fixe et de l'autre côté de manière articulée.

14. Unité d'injection selon l'une quelconque des revendications 7 à 13, **caractérisée en ce que** le système d'entraînement pour la mise en appui (31) comprend au moins deux éléments d'entraînement qui sont configurés comme vérins hydrauliques ou comme vérins pneumatiques à grandes surfaces (50, 50').

15. Unité d'injection selon la revendication 14, **caractérisée en ce que** le mécanisme d'accouplement pouvant être commandé (27) comprend deux vérins de verrouillage (55) par l'intermédiaire desquels il est possible de réaliser au moyen d'un goujon déplaçable ou d'un cône déplaçable ou d'une griffe déplaçable (57) une liaison en complémentarité de force et sans jeu entre le moule (3) et le vérin hydraulique ou le vérin pneumatique à grande surface (50, 50').

16. Unité d'injection selon la revendication 15, **caractérisée en ce que**, du côté du moule, les vérins de verrouillage (55) sont ancrés de manière fixe ou avec une petite plage de réglage.

17. Unité d'injection selon l'une quelconque des revendications 7 à 13, **caractérisée en ce que** le système d'entraînement pour la mise en appui (31) comprend un élément mobile à bille ou à rouleau (39) et **en ce qu'**après la mise en accouplement du système d'entraînement pour la mise en appui (31), la fonction de commande "mise en appui" peut être activée sur une position longitudinale sélectionnable de l'élément mobile à bille ou à rouleau (39).

18. Unité d'injection selon la revendication 17, **caractérisée en ce que** le mécanisme d'accouplement pouvant être commandé (27) est associé à l'élément mobile à bille ou à rouleau (39) en disposant d'un mouvement en régime libre correspondant ou d'une transmission forcée de la force par le système d'entraînement pour la mise en appui (31).

19. Unité d'injection selon l'une quelconque des revendications 17 ou 18, **caractérisée en ce que** le système d'entraînement pour la mise en appui (31) comprend un vérin pneumatique pouvant être commandé (28) ou une aile tournante pneumatique simple ou double pouvant être commandée.

20. Unité d'injection selon l'une quelconque des revendications 7 à 13, **caractérisée en ce que** le système d'entraînement pour la mise en appui (31) comprend un élément mobile à crémaillères et **en ce qu'**après la mise en accouplement du système d'entraînement pour la mise en appui (31), la fonction de commande "mise en appui" peut être activée sur une position longitudinale sélectionnable de l'élément mobile à crémaillères.

21. Unité d'injection selon la revendication 20, **caractérisée en ce que** des vérins de verrouillage (55) pouvant être respectivement commandés séparément sont prévus pour l'actionnement du mécanisme d'accouplement (27) et pour la constitution de la force du système d'entraînement pour la mise en appui (31).

22. Unité d'injection selon la revendication 20 ou 21, **caractérisée en ce que** l'élément mobile à crémaillères comprend deux crémaillères doubles disposées parallèlement et de manière symétrique à l'axe d'injection des deux côtés de l'unité d'injection (7).

23. Unité d'injection selon l'une quelconque des revendications 7 à 22, **caractérisée en ce que** l'unité d'injection (7) s'appuie sur deux guides latéraux et peut être déplacée parallèlement à l'axe de la vis sans fin d'injection et en que le dispositif d'entraînement pour la mise en mouvement est placé en position centrale à peu près à la hauteur des deux guides, alors qu'un système d'entraînement pour le déplacement (29) agit, au moyen de deux barres de traction (35) disposées de manière symétrique à l'axe de la tuyère et à peu près à la hauteur de l'axe de la tuyère, au centre de la machine et à peu près à la hauteur des deux guides latéraux pour le mouvement de l'unité et pour la mise en appui de la tuyère.

24. Unité d'injection selon l'une quelconque des revendications 7 à 23, **caractérisée en ce que** des moyens de commande pour la sélection de différents modes de fonctionnement lui sont attribués, à savoir :
- un mode automatique avec une mise en appui permanente pendant la totalité du fonctionnement en mode d'injection,
- un mode automatique avec une mise en appui cyclique et une interruption du contact thermique ou la création d'une fente entre la tuyère d'injection (4) et le moule (3),
- un mode de fonctionnement manuel ou de test avec un type de fonctionnement pouvant être sélectionné,
- un mode de fonctionnement pour la maintenance, alors que, selon le mode de fonctionnement du moment, le système d'entraînement pour la mise en appui (31) ou le système d'entraînement pour le déplacement (29) est activé, que la partie respectivement inactive est désaccouplée ou arrêtée et que la machine de moulage par injection est de préférence une machine de moulage par injection en matériau synthétique travaillant en position horizontale.
